# EUROPÄISCHE PATENTANMELDUNG

(11) **EP 2 754 576 A1**
(43) Veröffentlichungstag der Anmeldung: **16.07.2014**
(21) Anmeldenummer: 14150470.4
(22) Anmeldetag: 08.01.2014
(51) Int. Cl.: B60J 5/10, E05B 83/10, F16B 5/00

(54) **Verschließbare Türanordnung für einen Nutzfahrzeugaufbau**

(30) Priorität: 10.01.2013 DE 102013100215
(71) Anmelder: F. Hesterberg & Söhne GmbH & Co. KG, 58256 Ennepetal (DE)
(72) Erfinder: Tiedtke, Henning, 58256 Ennepetal (DE); Röhrig, Michael Armin, 42477 Radevormwald (DE)
(74) Vertreter: Christophersen & Partner

(57) **Zusammenfassung**

Verschließbare Türanordnung mit einer bezüglich einer ersten Seitenwand eines Aufbaus (1) schwenkbar lagerbaren ersten Tür (11), einer bezüglich einer zweiten Seitenwand des Aufbaus (1) schwenkbar lagerbaren zweiten Tür (12), und mit mindestens einer Schließstange (5) zur Arretierung der Tür. Jede Tür (11, 12) setzt sich aus mehreren entlang ihrer Längsränder miteinander verbundenen Profilelementen (25, 26, 27, 28, 31, 32) zusammen und zumindest eines der Profilelemente weist zu dem benachbarten Profilelement (27) hin einen Kanal (38) auf. Das benachbarte Profilelement weist eine Verzahnung (45a, 45b) auf, welche formschlüssig mit einer korrespondierend gestalteten Verzahnung (45a, 45b) in Eingriff steht, wobei eine der Verzahnungen eine Innenverzahnung (45a), und die andere eine Außenverzahnung (45b) ist. Die korrespondierend gestaltete Verzahnung ist an der Innenseite des Kanals angeordnet, oder an einem in den Kanal eingesetzten Ausgleichsprofil (26) angeordnet, wobei das mit der Innenverzahnung versehene Profilelement im Verzahnungsbereich (51) eine Dicke (D1) aufweist, die im Wesentlichen gleich ist der Innenweite des Kanals.

## Beschreibung

Die Erfindung betrifft eine verschließbare Türanordnung für einen aus einem Ladeboden, einem Fahrzeugdach und zwei Seitenwänden bestehenden Nutzfahrzeugaufbau, mit einer bezüglich der ersten Seitenwand des Aufbaus schwenkbar lagerbaren ersten Tür, einer bezüglich der zweiten Seitenwand des Aufbaus schwenkbar lagerbaren zweiten Tür, und mit mindestens einer an einer der Türen angeordneten und dieser gegenüber beweglich gelagerten Schließstange zur Arretierung der Tür an dem Ladeboden und/oder dem Fahrzeugdach.

Derartige verschließbare Türanordnungen sind z. B. aus der DE 299 24 647 U1, der DE 94 19 874 U1 und der DE 102 49 273 A1 bekannt. Solche Türanordnungen setzen sich in der Regel aus mehreren Bauteilen zusammen, die fertigungsbedingt relativ große Fertigungstoleranzen aufweisen können. Dies erschwert die exakte Justierung der Schwenktüren und verschlechtert die Passgenauigkeit der Schließ- und Verriegelungsmittel. Die exakte Justierung ist vor allem für die Zuverlässigkeit der häufig an den Türen vorhandenen Dichtungen wichtig.

Der Erfindung liegt die **Aufgabe** zugrunde, durch konstruktive Maßnahmen bei der Montage sowohl zu einer erleichterten Handhabung der Bauteile der Türanordnung als auch zu einer verbesserten Justierung der Türanordnung zu kommen.

Zur **Lösung** dieser Aufgabe wird bei einer Türanordnung mit den eingangs angegebenen Merkmalen vorgeschlagen, dass sich die Tür aus mehreren entlang ihrer Längsränder miteinander verbundenen Profilelementen zusammensetzt, dass zumindest eines der Profilelemente zu dem benachbarten Profilelement hin einen Kanal aufweist, dass das benachbarte Profilelement eine Verzahnung aus in Profillängsrichtung sich erstreckenden Zahnstrukturen aufweist, welche formschlüssig mit einer korrespondierend gestalteten Verzahnung in Eingriff steht, wobei eine der beiden Verzahnungen eine Innenverzahnung, und die andere der beiden Verzahnungen eine Außenverzahnung ist, und dass die korrespondierend gestaltete Verzahnung an der Innenseite des Kanals angeordnet ist, oder an einem in den Kanal eingesetztes Ausgleichsprofil angeordnet ist, wobei das mit der Innenverzahnung versehene Profilelement im Verzahnungsbereich eine Dicke aufweist, die im Wesentlichen gleich ist der Innenweite des Kanals.

Eine solchermaßen ausgebildete Türanordnung kann sich aus einzelnen, teils identisch gestalteten Profilelementen mit in der Regel einer Breite im Bereich von 5 cm bis 30 cm zusammensetzen. Da diese Profilelemente hohl und somit gewichtsreduziert sind, sind sie bei der Montage einfach handzuhaben. Ferner kann ein Vertauschen bei identischen Profilelemente folgenlos für den erzielbaren Montagezustand der Türanordnung bleiben. Durch die zueinander korrespondierenden Verzahnungen zweier der Profilelemente wird eine Korrekturmöglichkeit der durch Fertigungstoleranzen verursachten Maßabweichungen quer zur Längsrichtung der Profilelemente, d. h. der Türbreite, geschaffen. Dies führt zu einer besseren Justierung der beiden Türen an dem Nutzfahrzeugaufbau, was wiederum eine verbesserte Schließ- und Verriegelungssituation der Türanordnung ermöglicht, sowie eine höhere Passgenauigkeit in den Dichtungsbereichen.

Vorteilhafte Ausgestaltungen der Türanordnung sind in den Unteransprüchen angegeben.

So wird mit einer bevorzugten Ausgestaltung vorgeschlagen, dass sich die Tür aus vertikal angeordneten Profilelementen zusammensetzt, und dass mindestens ein Profilelement einen über seine ganze Länge durchgehenden Kanal zur Lagerung der Schließstange aufweist. Dies ermöglicht eine Lagerung der Schließstange, beispielsweise der Drehstange eines Drehstangenverschlusses, innerhalb des Profilelements, d. h. geschützt vor im Nutzfahrzeugbereich nicht zu unterschätzenden und häufig zu Störungen führenden Umwelteinflüssen.

Mit einer weiteren Ausgestaltung wird vorgeschlagen, dass das Randprofil den Kanal aufweist, in welchem die Schließstange angeordnet ist.

Gemäß einer weiteren Ausgestaltung sind die zwei äußeren Profilelemente als, vorzugsweise Ausnehmungen für Türdichtungen aufweisende, Randprofile ausgestaltet. Das zur Mitte des Nutzfahrzeugaufbaus hin angeordnete Randprofil weist den Kanal mit einer Innenweite auf, die im Wesentlichen gleich der Dicke aller weiteren Profilelemente ist. Bei dieser Ausgestaltung ist die korrespondierend gestaltete Verzahnung eine an einem in den Kanal eines Randprofils eingesetzten Ausgleichsprofil angeordnete Innenverzahnung, und das Ausgleichsprofil und das benachbarten Profilelement sind mit ihren Verzahnungen ineinander verrastet in dem Kanal des Randprofils angeordnet. Da sie die nach innen weisenden Kanäle in der Regel ohnehin aufweisen, ermöglicht es eine derartige Anordnung in eine Schwenktür einen Toleranzausgleich zu integrieren, bei dem herkömmliche Türrandprofile zum Einsatz kommen können. Die empfindlichen Verzahnungen können ferner innerhalb eines solchen Kanals eines dieser Randprofile ebenfalls vor Umwelteinflüssen geschützt werden. Dadurch, dass die Verzahnungen komplett in den Kanal eines Randprofils eingesetzt sind und somit darin auch optisch verschwinden, kann zudem eine homogene Türfläche ohne einmal mehr und einmal weniger breite Schlitze erzielt werden.

Gemäß einer weiteren Ausgestaltung ist das Ausgleichsprofil U-förmig mit zwei Schenkeln ausgestaltet, und die Innenverzahnung an den Schenkeln angeordnet. Der Verzahnungsbereich des benachbarten Profilelements weist dabei zum Ausgleichsprofil hin zwei die Außenverzahnung aufweisende Fortsätze auf. Als ein Profilelement in U-Form weist das Ausgleichsprofil eine einfache Grundform auf, kann somit unkompliziert gefertigt werden und stellt die kleinstmögliche Bauform für das Ausgleichsprofil dar. Dies ermöglicht ein geringes Gewicht, was sich wiederum positiv auf die Montage auswirken kann.

Weitere Vorteile und Einzelheiten ergeben sich aus der nachfolgenden Beschreibung eines Ausführungsbeispiels, wobei auf die Zeichnungen Bezug genommen wird. Darin zeigen:
- Fig. 1: eine rückwärtige Ansicht eines kastenförmig gestalteten Nutzfahrzeugaufbaus mit zwei durch Drehstangenverschlüsse verriegelbaren Schwenktüren;
- Fig. 2: eine perspektivische Ansicht des Nutzfahrzeugaufbaus nach Fig. 1;
- Fig. 3: einen horizontalen Schnitt durch eine Schwenktür der Fig. 1 mit einer Auslassung in der Mitte;
- Fig. 4: eine vergrößerte Ansicht der Einzelheit "IV" der Fig. 3;
- Fig. 5a: die Ansicht einer Schwenktür, in der die im folgenden näher beschriebenen Maßnahmen realisiert sind, und
- Fig. 5b: eine vergleichbare Ansicht einer Schwenktür, in der die im folgenden näher beschriebenen Maßnahmen nicht realisiert sind.

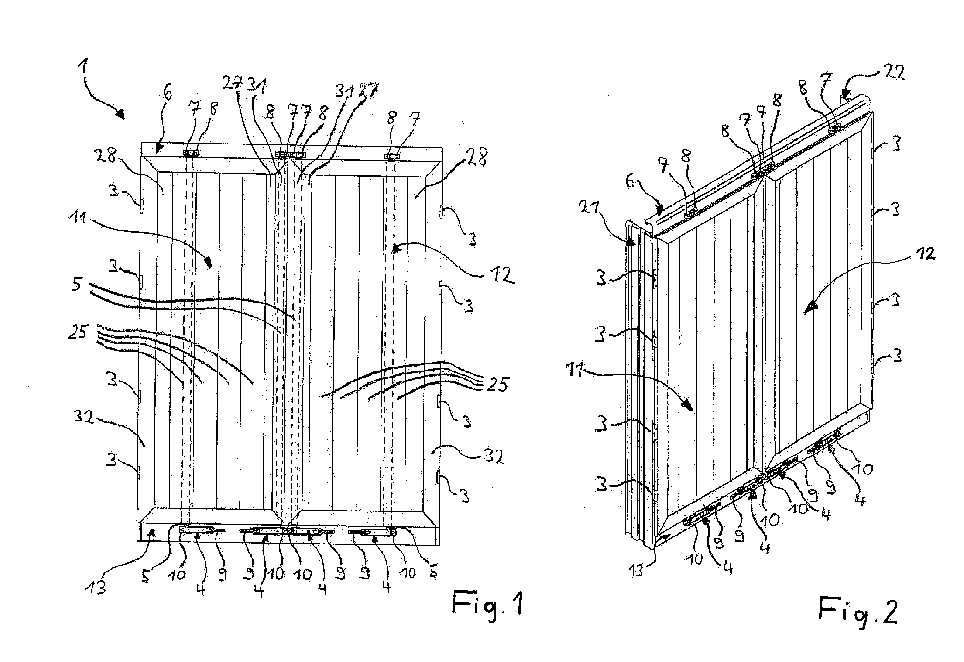

Figur 1 zeigt die Heckansicht eines Nutzfahrzeugaufbaus 1, etwa eines Lkw oder eines Lkw-Anhänger. Stirnseitig verschlossen ist der Aufbau 1 durch eine Türanordnung aus zwei Türen 11, 12. Die erste Tür 11 ist an einer vertikalen Portalsäule 21 am Ende einer ersten Seitenwand, und die zweite Tür 12 an einer vertikalen Portalsäule 22 am Ende einer zweiten Seitenwand schwenkbar gelagert, und zwar über jeweils eine Mehrzahl von Scharnieren 3. Ist der Aufbau 1 ein Kastenaufbau mit starren Seitenwänden, so kann die schwenkbare Lagerung der Türen 11, 12 statt an den Portalsäulen auch unmittelbar an den Seitenwänden erfolgen.

Das Öffnen und Verschließen der beiden Türen 11, 12 erfolgt über Drehstangenverschlüsse 4. Zu den Drehstangenverschlüssen 4 gehören als Drehstangen ausgestaltete Schließstangen 5, welche in Figur 1 weitgehend gestrichelt dargestellt sind und die Türen 11, 12 vertikal durchdringen. Die Drehstangen 5 gehen im Bereich des Fahrzeugdachs 6 des Kastenaufbaus 1 in je einen Drehriegel 7 über. Der Drehriegel 7 ist mit der jeweiligen Drehstange 5 drehfest verbunden und greift in eine Aufnahmetasche 8 oben an dem Aufbau 1 ein. Die Drehbetätigung der Drehstange 5 erfolgt über einen Verschlusshebel 9 des Drehstangenverschlusses 4. Der Verschlusshebel 9 ist im Schließzustand in einer Grundplatte 10 des Drehstangenverschlusses 4 festgelegt und darin blockiert. Die Grundplatte 10 ist wiederum an dem Ladeboden 13 des Kastenaufbaus festgelegt.

In Figur 2 ist der Nutzfahrzeugaufbau 1 nach Figur 1 in perspektivischer Ansicht seitlich gedreht dargestellt, so dass die Portalsäulen 21, 22 der Seitenwände, an denen die beiden Türen 11, 12 über die Scharniere 3 angelenkt sind, zu erkennen sind.

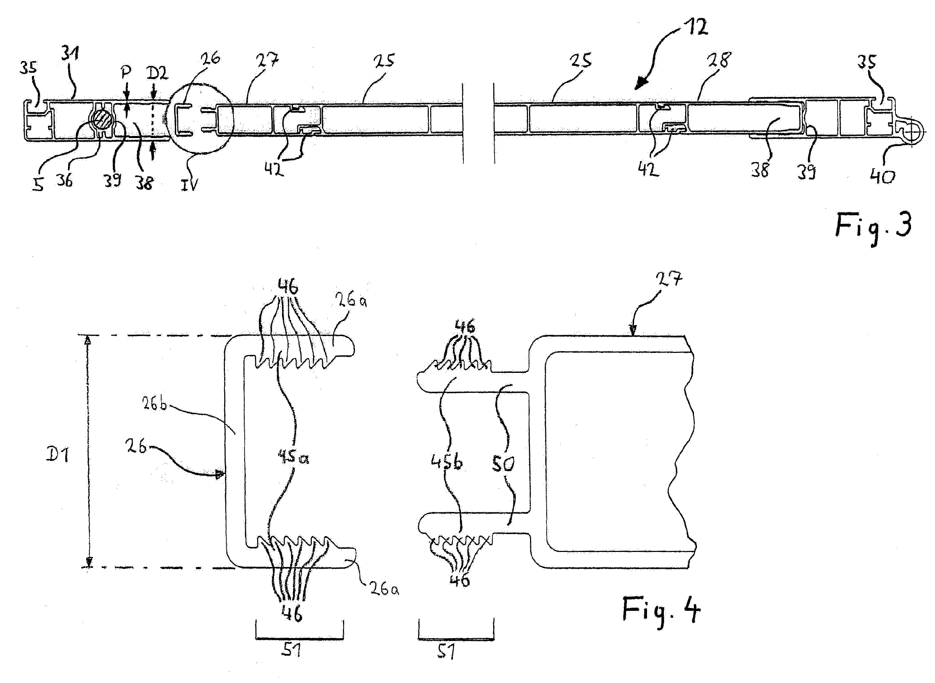

Figur 3 zeigt einen horizontalen Schnitt durch die zweite Tür 12 nach Figur 1 mit einer Auslassung in der Mitte für eine bessere Darstellbarkeit. Die Tür 12 setzt sich beim Ausführungsbeispiel aus die seitlichen Türränder bildenden Randprofilen 31, 32, mehreren identischen Bordwandprofilen 25, einem Ausgleichsprofil 26, einem dem Ausgleichsprofil benachbarten Profilelement 27 und einem Abschlussprofil 28 zusammen. Durch die Auslassung in Figur 3 sind von den vier oder mehr identischen Bordwandprofilen 25 nur zwei in Teilen zu sehen.

Das innere Randprofil 31 der zweiten Tür 12 grenzt wie in den Figuren 1 und 2 ersichtlich unmittelbar an die erste Tür 11 an und weist eine Ausnehmung 35 zur Aufnahme einer nicht dargestellten Türdichtung auf, die die beiden Türen 11, 12 gegeneinander abdichtet.

Das innere Randprofil 31 weist einen Kanal 36 auf, welcher die gesamte Länge des inneren Randprofils 31 durchsetzt. Die Wandung des Kanals 36 dient dazu, eine in dem Kanal 36 angeordnete Schließstange 5 zu führen bzw. zu lagern. Bei der Schließstange 5 handelt es sich vorzugsweise um eine Drehstange.

Zur restlichen Türfläche hin, d. h. in Richtung der anderen Profilelemente hin, öffnet sich das innere Randprofil 31 zu einem U-förmigen und rinnenförmigen Kanal 38, der sich entlang der Längsrichtung des Randprofils 31, d. h. parallel zu dem Kanal 36, erstreckt. Dadurch, dass die Dicke D2 des inneren Randprofils 31 gegenüber der Dicke D1 der anderen Profilelemente 25, 26, 27, 28 mit Ausnahme des äußeren Randprofils 32 im Wesentlichen um die zweifache Profilstärke P der Seitenwände des Kanals 38 vergrößert ist, würden alle Profilelemente 25, 26, 27, 28 der Dicke D1 in den Kanal 38 passen.

Das äußere Randprofil 32 entspricht seitenverkehrt im Wesentlichen dem inneren Randprofil 31, d. h. es weist ebenfalls die Dicke D2, eine Ausnehmung 35 sowie einen Kanal 38 auf. Das äußere Randprofil 32 weist zusätzlich an seinem äußeren Längsrand Scharniere 40 zur schwenkbaren Lagerung der Tür 12 an der Seitenwand 22 auf, sowie eine Nut, in der sich eine Dichtung zur Anlage an der Stirnfläche der Seitenwand 22 einsetzen lässt.

Den Großteil der zwischen den Randprofilen 31, 32 liegenden Türfläche bilden mehrere identische Bordwandprofile 25, welche mittels an ihren Längsrändern ausgeformten Verriegelungsmitteln 42 dauerhaft durch Verrasten miteinander verbunden sind.

Zwischen dem äußeren Randprofil 32 und dem äußersten Bordwandprofil 25 ist ein Abschlussprofil 28 angeordnet. Das Abschlussprofil 28 ist mit dem benachbarten Bordwandprofil 25 ebenfalls über verrastbare Verriegelungsmittel 42 verbunden. Mit seinem anderen flach ausgestalteten Längsrand sitzt das Abschlussprofil 28 bündig am Grund 39 des Kanals 38 des äußeren Randprofils 32.

An das zu dem inneren Randprofil 31 am nächsten liegende Bordwandprofil 25 schließt sich, ebenfalls über Verriegelungsmittel 42 mit diesem verbunden, eines der beiden Verzahnungen 45a, 45b aufweisende Profilelement 27 an. Das zweite Verzahnungen aufweisende Profilelement ist das Ausgleichsprofil 26.

Wie in Figur 4 zu erkennen, ist das Ausgleichsprofil 26 ein U-Profil mit an den Innenseiten seiner Schenkel 26a angeordneten Verzahnungen 45a. Diese Innenverzahnung 45a des Ausgleichsprofils 26 besteht aus mehreren dreieckförmigen Zahnstrukturen 46, die entlang der Längsrichtung des Ausgleichsprofils 26 verlaufen. Mit seiner zwischen den mit den Verzahnungen 45a versehenen Schenkel 26a angeordneten Basis 26b liegt das Ausgleichsprofil 26 im montierten Zustand innerhalb des Kanals 38 des inneren Randprofils 31 bündig an dessen Grund 39 an. Dabei greift in die Innenverzahnung 45a des Ausgleichsprofils 26 eine Außenverzahnung 45b des benachbarten Profilelements 27 so weit ein, dass die zweite Tür 12 ihre gewünschte Gesamtbreite erhält. Die Außenverzahnung 45b besteht aus mehreren mit jenen des Ausgleichsprofils 26 korrespondierend gestalteten Zahnstrukturen 46.

Bei der Montage wird jedoch zunächst die Innenverzahnung 45a und die Außenverzahnung 45b mittels Verrastung lediglich jeweils einer ihrer Zahnstrukturen 46 miteinander verbunden und so gemeinsam in den Kanal 38 des Randprofils 31 bis zum Anschlag der Basis 26b an den Grund 39 eingeführt. Danach wird die gesamte Tür 12 mittels einer nicht abgebildeten Spannvorrichtung, zumeist unter Verrasten weiterer Zahnstrukturen 46, auf die gewünschte Türbreite zusammengeschoben. Dazu ist die Außenverzahnung 45b auf den Außenseiten zweier Fortsätze 50 eines Verzahnungsbereichs 51 des benachbarten Profilelements 27 angeordnet.

Der Kanal 38 des inneren Randprofils 31 ist so tief, dass im montierten Zustand sowohl das komplette Ausgleichsprofil 26 als auch der Verzahnungsbereich 51 von den Seitenwänden des Kanals 38 überdeckt werden.

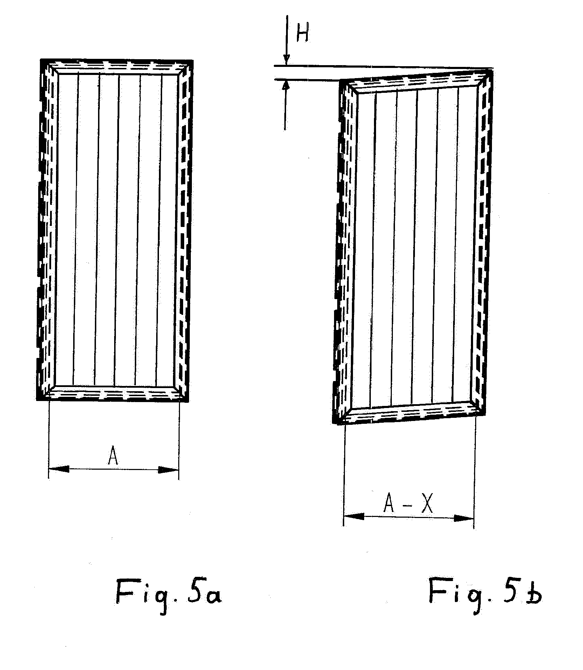

Die Figuren 5a und 5b zeigen nach Art einer Vergleichsdarstellung einmal eine bereits länger gebrauchte Schwenktür mit den oben beschriebenen Maßnahmen, und einmal ohne diese. Denn gemäß Figur 5b neigen derartige Schwenktüren nach langjährigem Einsatz und aufgrund der Erschütterungen dazu, sich an ihrem dem Scharnier abgewandten Rand mehr und mehr und unter Verformen zu einem Parallelogramm abzusenken (Absenkung H). Dadurch verschlechtert sich die Justierung der Türe an dem Nutzfahrzeugaufbau, was wiederum ein ordnungsgemäßes Schließen und Verriegeln erschwert oder sogar verhindert. Eine Ursache für das Absenken ist die zu geringe Maßgenauigkeit in der summierten Breite der Profilelemente 25, d.h. das über die Breite der Tür vorhandene Spiel.

Mit der Erfindung hingegen wird, wie in Figur 5a dargestellt, dieses Spiel in Breitenrichtung minimiert, denn durch die korrespondierenden Verzahnungen an zumindest zwei der Profilelemente wird eine Korrekturmöglichkeit der durch Fertigungstoleranzen verursachten Maßabweichungen quer zur Längsrichtung der Profilelemente 25, d. h. der Türbreite, geschaffen. Dies führt zu einer präzisen Einstellung der summierten Breiten der Profilelemente mit der Folge einer besseren Justierung der beiden Türen an dem Nutzfahrzeugaufbau, was wiederum eine verbesserte Schließ- und Verriegelungssituation der Türanordnung ermöglicht.

Die Erfindung ist nicht auf die in den Figuren gezeigte Ausführungsform begrenzt. Selbstverständlich können die Profilelemente 25, 26, 27, 28 auch in entgegengesetzter Orientierung angeordnet sein, sodass im montierten Zustand der zweiten Tür 12 das Abschlussprofil 28 in dem Kanal 38 des inneren Randprofils 31 sitzt und das Ausgleichsprofil 26 auch der Verzahnungsbereich 51 des benachbarten Profilelements 27 in das äußere Randprofil 32 eingesetzt ist. Ebenso selbstverständlich ist, dass die Verhältnisse bei der ersten Tür 11 denen der zweiten Tür 12 spiegelbildlich entsprechen.

### Bezugszeichenliste

- 1: Aufbau, Nutzfahrzeugaufbau
- 3: Scharnier
- 4: Drehstangenverschluss
- 5: Drehstange/Schließstange
- 6: Fahrzeugdach
- 7: Drehriegel
- 8: Aufnahmetasche
- 9: Verschlusshebel
- 10: Grundplatte
- 11: erste Tür
- 12: zweite Tür
- 13: Ladeboden
- 21: Portalsäule der ersten Seitenwand
- 22: Portalsäule der zweiten Seitenwand
- 25: Bordwandprofil
- 26: Ausgleichsprofil
- 26a: Schenkel
- 26b: Basis
- 27: benachbartes Profilelement, Profilelement
- 28: Abschlussprofil
- 31: Randprofil
- 32: Randprofil
- 35: Ausnehmung
- 36: Kanal
- 38: Kanal
- 39: Grund
- 40: Scharniere
- 42: Verriegelungsmittel
- 45a: Innenverzahnung, Verzahnung
- 45b: Außenverzahnung, Verzahnung
- 46: Zahnstruktur
- 50: Fortsätze
- 51: Verzahnungsbereich
- D1: Dicke
- D2: Dicke
- H: Höhe
- P: Profilstärke

## Patentansprüche

1. Verschließbare Türanordnung für einen aus einem Ladeboden (13), einem Fahrzeugdach (6) und zwei Seitenwänden bestehenden Nutzfahrzeugaufbau (1), mit einer bezüglich der ersten Seitenwand des Aufbaus (1) schwenkbar lagerbaren ersten Tür (11), einer bezüglich der zweiten Seitenwand des Aufbaus (1) schwenkbar lagerbaren zweiten Tür (12), und mit mindestens einer an einer der Türen (11, 12) angeordneten und dieser gegenüber beweglich gelagerten Schließstange (5) zur Arretierung der Tür (11, 12) an dem Ladeboden (13) und/oder dem Fahrzeugdach (6),
**dadurch gekennzeichnet,**
**dass** sich die Tür (11, 12) aus mehreren entlang ihrer Längsränder miteinander verbundenen Profilelementen (25, 26, 27, 28, 31, 32) zusammensetzt,
**dass** zumindest eines der Profilelemente (25, 26, 27, 28, 31, 32) zu dem benachbarten Profilelement (27) hin einen Kanal (38) aufweist,
**dass** das benachbarte Profilelement (27) eine Verzahnung (45a, 45b) aus in Profillängsrichtung sich erstreckenden Zahnstrukturen (46) aufweist, welche formschlüssig mit einer korrespondierend gestalteten Verzahnung (45a, 45b) in Eingriff steht, wobei eine der beiden Verzahnungen eine Innenverzahnung (45a), und die andere der beiden Verzahnungen eine Außenverzahnung (45b) ist, und dass die korrespondierend gestaltete Verzahnung (45a, 45b)
an der Innenseite des Kanals (38) angeordnet ist,
oder
an einem in den Kanal (38) eingesetzten Ausgleichsprofil (26) angeordnet ist, wobei das mit der Innenverzahnung (45a) versehene Profilelement (26, 27) eine Dicke (D1) aufweist, die im Wesentlichen gleich ist der Innenweite des Kanals (38).

2. Verschließbare Türanordnung nach Anspruch 1, **dadurch gekennzeichnet, dass** sich die Tür (11, 12) aus vertikal angeordneten Profilelementen (25, 26, 27, 28, 31, 32) zusammensetzt.

3. Verschließbare Türanordnung nach Anspruch 1 oder 2, **dadurch gekennzeichnet, dass** die zwei äußeren Profilelemente als, vorzugsweise Ausnehmungen (35) für Türdichtungen aufweisende, Randprofile (31, 32) ausgestaltet sind, und dass die Randprofile (31, 32) jeweils zur Türmitte hin den Kanal (38) mit einer Innenweite aufweisen, die im Wesentlichen gleich der Dicke (D1) aller weiteren Profilelemente (25, 26, 27, 28) ist.

4. Verschließbare Türanordnung nach Anspruch 3, **dadurch gekennzeichnet, dass** die korrespondierend gestaltete Verzahnung eine an einem in den Kanal (38) eines Randprofils (31, 32) eingesetzten Ausgleichsprofil (26) angeordnete Innenverzahnung (45a) ist.

5. Verschließbare Türanordnung nach Anspruch 4, **dadurch gekennzeichnet, dass** das Ausgleichsprofil (26) und das benachbarte Profilelement (27) mit ihren Verzahnungen (45a, 45b) ineinander verrastet in dem Kanal (38) des Randprofils (31, 32) angeordnet sind.

6. Verschließbare Türanordnung nach Anspruch 5, **dadurch gekennzeichnet, dass** das Ausgleichsprofil (26) U-förmig mit zwei Schenkeln (26a) ausgestaltet ist, die Innenverzahnung (45a) an den Schenkeln (26a) angeordnet ist, und dass der Verzahnungsbereich (51) des benachbarten Profilelements (27) zum Ausgleichsprofil (26) hin zwei die Außenverzahnung (45b) aufweisende Fortsätze (50) aufweist.

7. Verschließbare Türanordnung nach einem der Ansprüche 2 bis 6, **dadurch gekennzeichnet, dass** mindestens ein Profilelement (25, 26, 27, 28, 31, 32) einen über seine ganze Länge durchgehenden Kanal (36) zur Lagerung der Schließstange (5) aufweist.

8. Verschließbare Türanordnung nach Anspruch 7, **dadurch gekennzeichnet, dass** das Randprofil (31) den Kanal (36) aufweist, in welchem die Schließstange (5) angeordnet ist.

9. Verschließbare Türanordnung nach einem der Ansprüche 3 bis 8, **dadurch gekennzeichnet, dass** an dem äußeren Randprofil (32) Scharniere (40) zur schwenkbaren Lagerung an einer Seitenwand (21, 22) ausgeformt sind.

10. Verschließbare Türanordnung nach einem der vorherigen Ansprüche, **dadurch gekennzeichnet, dass** die Profilelemente (25, 26, 27, 28, 31, 32) Strangpressprofile aus Leichtmetall sind.
